(19) Europäisches Patentamt

European Patent Office

Office européen des brevets

(11) **EP 0 395 125 B1**

(12) **EUROPEAN PATENT SPECIFICATION**

(45) Date of publication and mention
of the grant of the patent:
**24.01.1996 Bulletin 1996/04**

(51) Int Cl.6: **G11B 20/10**, G11B 20/18,
G11B 20/12

(21) Application number: **90111761.4**

(22) Date of filing: **10.10.1986**

(54) **A PCM recording and reproducing apparatus**

PCM-Aufzeichnungs- und Wiedergabegerät

Appareil d'enregistrement et de reproduction PCM

(84) Designated Contracting States:
**CH DE FR GB LI**

(30) Priority: **11.10.1985 JP 227187/85**
**23.01.1986 JP 12877/86**
**23.01.1986 JP 12878/86**

(43) Date of publication of application:
**31.10.1990 Bulletin 1990/44**

(62) Application number of earlier application in
accordance with Art. 76 EPC: **86307872.1**

(73) Proprietor:
**MITSUBISHI DENKI KABUSHIKI KAISHA**
**Tokyo (JP)**

(72) Inventors:
• **Onishi, Ken, c/o Mitsubishi Denki K.K.**
**Babazusho, Hagaokakyo-shi, Kyoto-fu (JP)**
• **Sugiyama, Kazuhiro, c/o Mitsubishi Denki K.K.**
**Babazusho, Hagaokakyo-shi, Kyoto-fu (JP)**

(74) Representative:
**Beresford, Keith Denis Lewis et al**
**London WC1R 5DJ (GB)**

(56) References cited:
EP-A- 0 127 687          GB-A- 2 060 227
GB-A- 2 082 356          GB-A- 2 082 809
US-A- 4 224 642

• "The Art of Digital Audio", John Watkinson,
Focla Press, 80 Montvale Avenue, Stoneham,
MA 02180, USA, Borough Green, Sevenoaks,
Kent, 1988, p.309-363
• "ON THE SIGNAL FORMAT FOR THE
IMPROVED PROFESSIONAL USE 2 CHANNEL
DIGITAL AUDIO RECORDER", Yoshinobu
Ishida, Ken Onishi et al., presented at the 79th
Convention 1985 October 12-16 New York, AES
(Audio Engineering Society, New York 10165
USA)
• "The Art of Digital Audio", John Watkinson,
Focla Press, 80 Montvale Avenue, Stoneham,
MA 02180, USA, Borough Green, Sevenoaks,
Kent, 1988, p.309-363
• "ON THE SIGNAL FORMAT FOR THE
IMPROVED PROFESSIONAL USE 2 CHANNEL
DIGITAL AUDIO RECORDER", Yoshinobu
Ishida, Ken Onishi et. al., presented at the 79th
Convention 1985 October 12-16 New York, AES
(Audio Engineering Society, New York 10165
USA)

## Description

The present invention relates to a method of pulse code modulation (PCM) recording, recording apparatus therefor recording tapes bearing recorded data and reproducing apparatus therefor.

The problem of correcting interpolating and smoothing signals reproduced from hand-cut edited i.e. spliced recorded tape is addressed and is resolved by providing a modified recording format compatible with an increase in the cross fading period in which smoothing is applied.

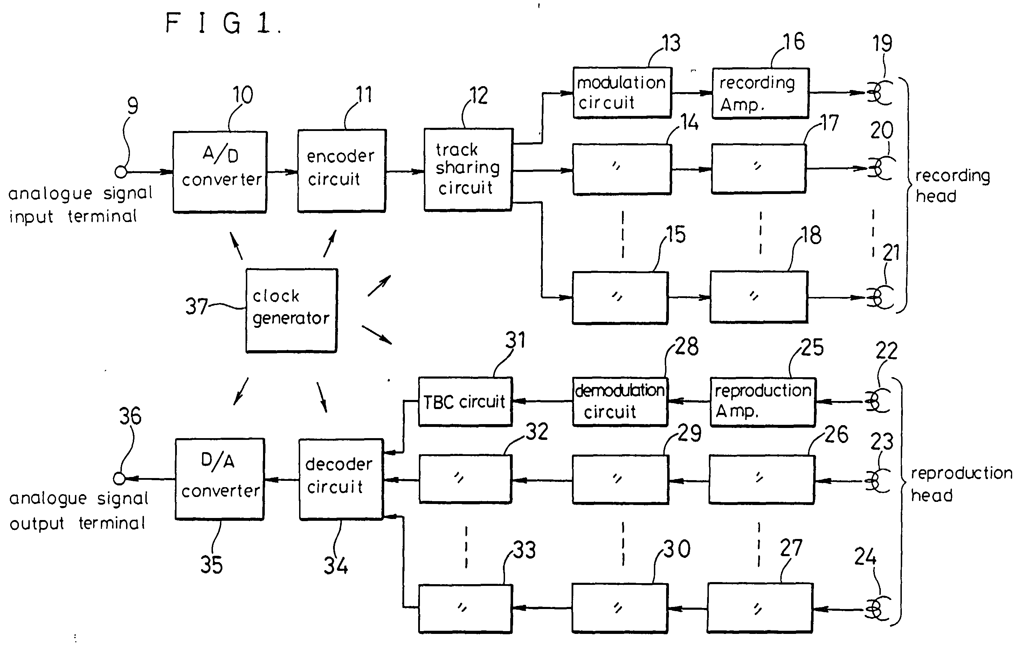

By way of background reference will first be made to a PCM recording and reproducing apparatus of conventional construction. This is shown in figure 1. In the apparatus shown two channels of analogue signals are input via terminal 9 to an analogue digital converter 10. This analogue digital converter 10 is followed by an encoder circuit 11 and a track sharing circuit 12. The output side of the tracking sharing circuit 12 is connected to a number of separate track channels in each of which there is provided: a respective modulation circuit 13, 14 to 15; a respective recording amplifier 16, 17 to 18; and a respective recording head 19, 20 to 21. In the reproducing part of this apparatus there are provided a like plurality of track channels each of which comprises: a respective reproduction head 22, 23 to 24; a respective reproduction amplifier 25, 26 to 27; a respective demodulation circuit 28, 29 to 30; and a respective time axis correction circuit (hereinafter referred to as a "TBC circuit") 31, 32 to 33. The respective track channels are connected to a decoder circuit 34 which in turn is connected to a digital to analogue converter 35. This digital to analogue converter 35 is connected to an analogue signal output terminal 36.

Description of operation of this apparatus will now be given. Firstly, in the recording part of the apparatus, an analogue signal input at the input terminal 9 is converted into digital data by the analogue to digital converter 10 and error correction and detection codes C2 inspection data and C1 inspection data, respectively, are added thereto by the encoder circuit 11 to provide means of detecting and correcting errors such as might arise from imperfections in the recording tape. A control signal is added to the encoded signal by the track sharing circuit 12 and encoded signals are shared amongst the plurality of track channels. In these track channels the respective encoded signals are modulated by the modulation circuits 13, 14 to 15 and the pulse code modulated (PCM) data produced is of a form which is suitable for recording the same onto recording tape. Synchronisation and control signals are added and the respective PCM signals are recorded on the tape via the recording amplifiers 16, 17 to 18 and the recording heads 19, 20 to 21. In the recording part of the apparatus, signals reproduced by the reproduction heads 22, 23 to 24 are amplified by the reproduction amplifiers 25, 26 to 27 and the synchronisation signals are detected and protected by the demodulation circuits 28, 29 to 30 and clocks are reproduced.

Those clocks and the data from which the synchronisation signals are separated are sent to the TBC circuits 31, 32 to 33. In the TBC circuits 31, 32 to 33 jitters and wow flutters are removed from the reproduced data, and the data is sent to the decoder circuit 34. In the decoder circuit 34 error detection and correction of the data is conducted making use of the C1 and C2 inspection data. This data is converted into analogue signal by the digital to analogue converter 35 and is output from the output terminal 36. It is noted that the control signal is used for control of emphasis and clock frequency. A clock signal is sent to the analogue to digital converter 10 and the digital to analogue converter 35 and clocks of other frequency from a clock generator 37 are applied to the track sharing circuit 12 the modulation circuits 13, 14 to 15 and the TBC circuits 31, 32 to 33.

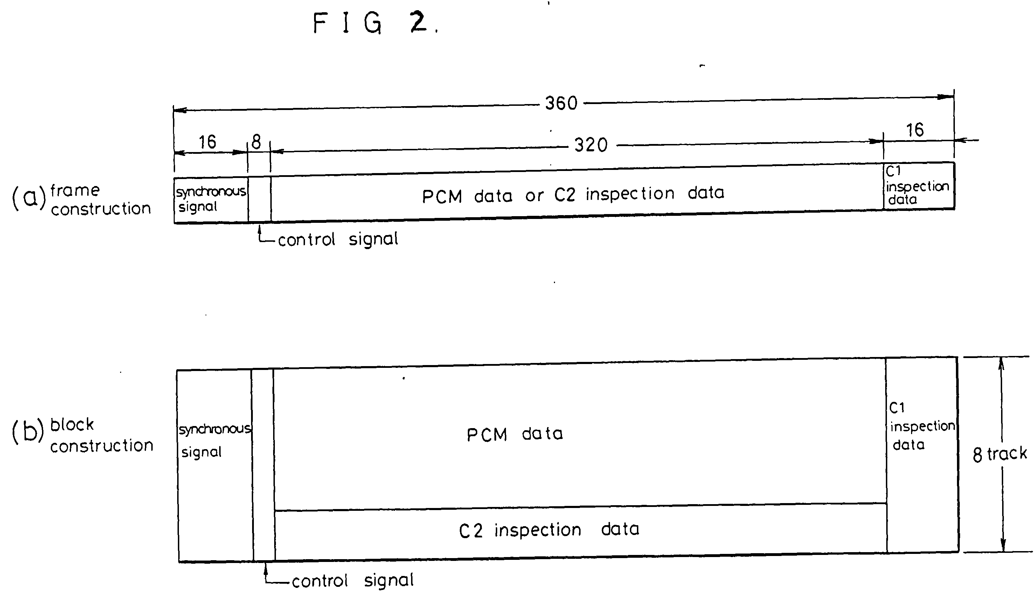

Reference will now be made to the frame and block construction of PCM data time shift and convolution interleave patterning encoder circuit arrangement and illustrated concept of cross fading shown in figures 2 to 6. Figures 2, 3 and 6 are reproduced from a paper entitled "On the signal format for the improved professional use two channel digital audio recorder" which was presented at the 79th Convention, 1985, October 12 to 16 organised by the Audio Engineering Society, pp 1 to 8 (Reference 1).

Typical frame and block construction of PCM recording data is shown in figures 2(a) and (b), respectively. The frame construction comprises a total of 360 bits including 16 bits of synchronisation signal, 8 bits of control signal, 320 bits of PCM data or C2 inspection data and 16 bits of C1 inspection data. The block configuration shown is for an eight track recording tape and is compiled from six frames of PCM data and two frames of corresponding C2 inspection data. It is noted that the PCM data and corresponding C2 inspection data is not frame constituted in order of appearance but is time shifted and interleaved so as to diversify burst errors which occur due to dropouts such as occur during reproduction.

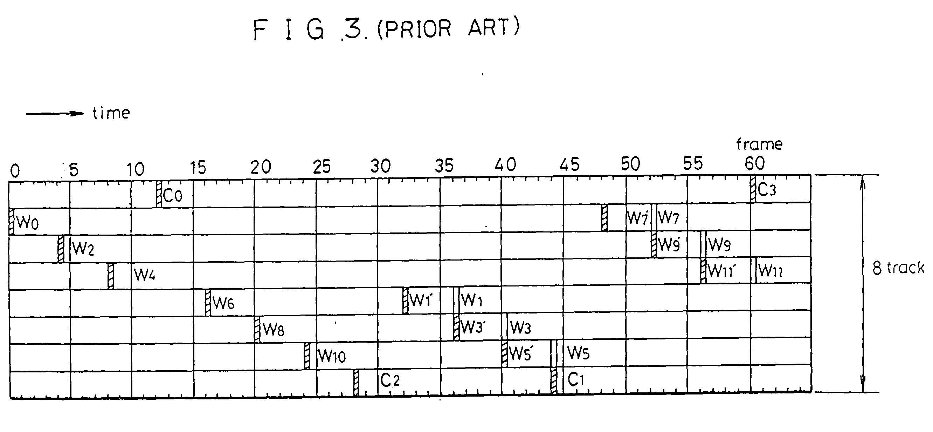

Figure 3 shows the time shift and interleave pattern. A/D converted data is generated in the order $W_0$, $W_1$, $W_2$,... These reference characters W refer to one word of data which in this case is of 32 bits comprising sixteen bits from each of the two input channels. The PCM data shown with dashes $W_1'$, $W_3'$, ..., $W_{11}'$ are antecedent words of data which precede each of the odd data words $W_1$, $W_3$, ... $W_{11}$ by a time interval of $d_1$. Reference characters $C_0$, $C_1$, $C_2$ and $C_3$ represent the C2 inspection data generated from even data $W_0$, $W_2$, .., $W_{10}$ and antecedent odd data $W_1'$, $W_3'$, .., $W_{11}'$.

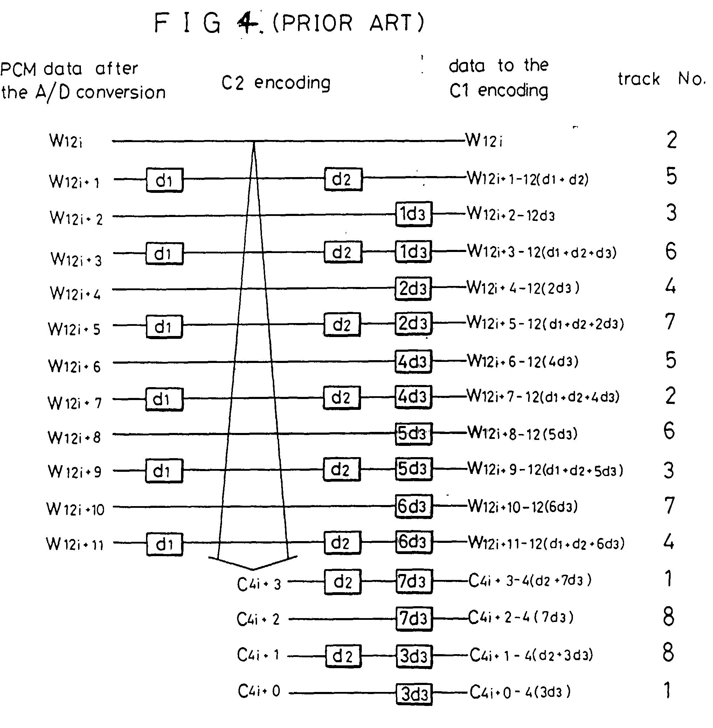

Figure 4 shows the data time shift and convolution interleave delay sequence. The time shifting and convolutional interleaving operation will now be described with reference to this figure.

First of all, the A/D converted data are separated by alternate application of a time delay $d_1$ into even designated data $W_{12i}$, $W_{12i+2}$, ... and delayed odd data $W_{12i+1}$, $W_{12i+3}$, ... Following this separation the even data and the delayed odd data are encoded to produce corresponding C2 error correction data. In the present case n = 4 error correction data codes $C_{4i+3}$, $C_{4i+2}$, $C_{4i+1}$ and $C_{4i}$ are produced for every twelve successive data words $W_{12i}$ to $W_{12i+11}$. Subsequently the delayed odd data and two out of four data codes $C_{4i+3}$ and $C_{4i+1}$ are delayed by a further delay $d_2$. Various delays $d_3$ to seven $d_3$ are then applied to the data words and correction codes as shown in figure 4. In particular integer multiples 0, 1 and 2 of the interleave delay $d_3$ are applied to the first three even data words $W_{12i}$, $W_{12i+2}$ and $W_{12i+4}$, respectively and to the first three odd words $W_{12i+1}$, $W_{12i+3}$ and $W_{12i+5}$, respectively. Multiple increments 4, 5 and 6 of the interleaved delay $d_3$ are applied to the remainder even data words $W_{12i+6}$, $W_{12i+6}$, $W_{12i+8}$ and $W_{12i+10}$, respectively and the odd data words $W_{12i+7}$, $W_{i2i+11}$, respectively. A multiple increment 3 of the interleave delay $d_3$ is applied to two of the error correction codes $C_{4i}$ and $C_{4i+1}$ and the multiple increment 7 of the interleave delay $d_3$ is applied to the remainder two error correction codes $C_{4i+2}$ and $C_{4i+3}$. The convolutional interleave encoding of each succession i of the twelve data words $W_{12i}$ to $W_{12i+11}$ is performed in a cycle period T and the time shift delays $d_1$ and $d_2$ and interleave $d_3$ have in this case the values 20T, 160T and 20T, respectively. It is noted that the time interval spanning the compilation of an entire frame or block is 5T. Respective frame timings 0 to 60 are shown in figure 3.

The data is arranged as shown in figure 3. The even number PCM data and the odd number PCM data are time shifted apart from each other to enable correction by mean value interpolation using previous and following data values and this can accommodate burst errors arising. Furthermore, both even data and odd data are dispersed by different multiple increment interleave delays. This is so that abnormal sounds are not generated when odd and even data are corrected when it is not possible to make correction by reference to the C2 correction data.

In the time shift and interleave pattern shown in figure 3 the order of presentation is one in which three even data words $W_0$, $W_2$, $W_4$ are followed by the first error correction code $C_0$ in turn followed by a remainder three even words $W_6$, $W_8$, $W_{10}$. The last even data word $W_{10}$ is followed by a second error correction code $C_2$. After a separation delay this code is followed by the first three odd words $W_1$, $W_3$ and $W_5$ a spacing interval and the remainder three odd data words $W_7$, $W_9$ and $W_{11}$. The remainder two error correction codes $C_1$, $C_3$ are synchronous with the third odd data word $W_5$ and the sixth and last odd data word $W_{11}$, respectively. It is noted that the spacing between the last even word $W_{10}$ and the first odd data word $W_1$ is twelve frames or 60 T.

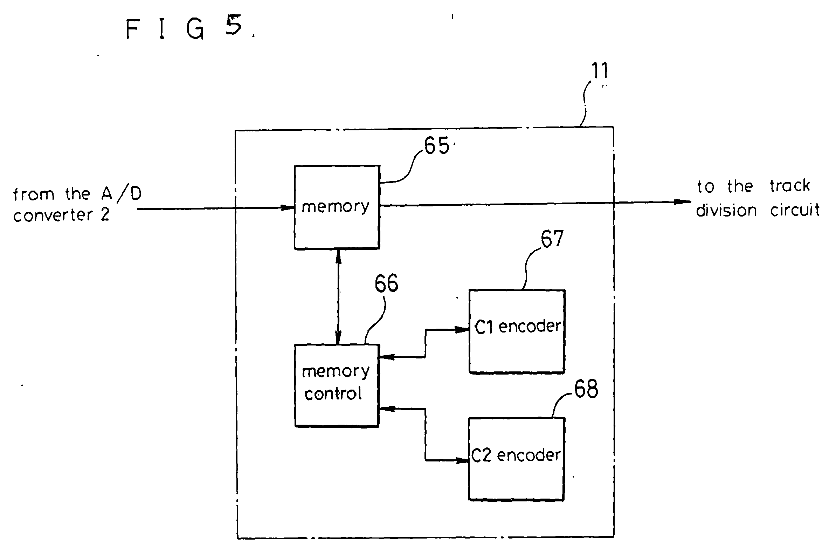

Figure 5 shows a block diagram of the encoder circuit 11 of the PCM recording and reproducing apparatus just described. This comprises a memory 65, a memory control circuit 66 arranged to control operation of the memory and encoders 67 and 68 for generating error detection codes, i.e. C1 inspection data and error correction codes, i.e. C2 inspection data. These encoders are subject to control by the memory control circuit 66. In order to simplify the memory control circuit 66 it is desirable that the capacity of the memory is divided into 61 block portions and that the data from the A/D converter 10 are successively recorded at the positions of $W_0$, $W_1$, $W_2$ ... as shown in figure 3. In this system, the C2 encoding is then conducted by taking out the data in the order $W_0$, $W_1$, $W_2$ from the memory 65 thereby to conduct C2 encoding and the C2 inspection data produced is then stored in the memory 65. Several frames of C2 encoded data are stored and C1 encoding is conducted by the C1 encoder 67 to generate the C1 inspection data. The encoded data C2 is sent to the track sharing circuit 12.

The properties of this conventional PCM recording and reproducing apparatus will now be described. As apparent from figure 3 the C2 encoded data is diversified to 61 blocks at equal intervals, i.e. every four blocks from the error correction ability when an error is generated at every block becomes that of sixteen blocks because four errors can be corrected in the case where the error is detected by the C1 code and corrected by the C2 code. For example, in such a case where the Reed Solomon code on a Galoia field ($2^8$) dealing with eight bits as one unit (one symbol) is used as the $C_2$ error correction code.

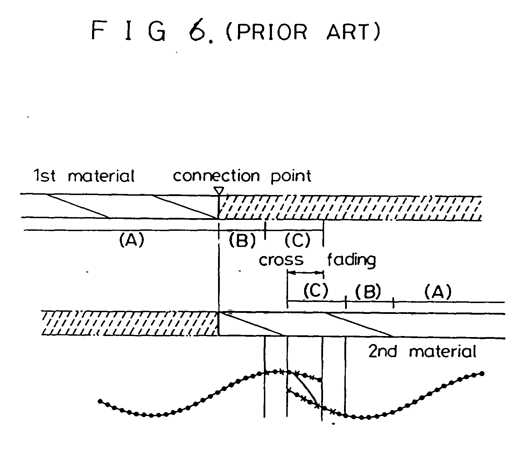

Figure 6 shows how hand cut editing is treated. Suppose two recording tapes are connected together at a splice point. When reproduction is conducted, tape 1 on the left is reproduced in the order from usual reproduction section A through an error correction section B and finally an error correction section C. Conversely the signal reproduced from the second tape, tape 2, is reproduced in the reverse order to that above, i.e. from error correction section C to error correction section B to the usual reproduction section A. Herein, the error correction section B is a section where the original signal can be recovered by conducting an error correction reliant on detection by the C1 error detection codes and correction using the C2 correction codes. Error correction section C is a section where errors are corrected by interpolation based on adjacent even data or odd data. Error correction sections C overlap as can be seen in figure 6. By conducting a fade-out of the signal of the first tape, tape 1, and a fade-in of the signal of the second tape, tape 2, and summing both signals, a "cross-fading" is performed and by this means the reproduced signal in the vicinity of the splice can be smoothed. The section over which this cross-fading can be conducted is determined by the data arrangement. As mentioned the interval between the last even word and the first odd word amounts to twelve blocks only in the arrangement shown.

Specific values of the parameters will now be mentioned. Thus, for a sampling frequency of 48 kHz and a frame constituted of 10 x 2 and data words arranged on six tracks, the frequency of one block becomes 48/(10x6) = 0.8 kHz. Accordingly the time interval of twelve blocks cross-fading is 12/0.8 = 15 milliseconds. Actually errors are generated in the neighbourhood of the splice and this time interval is truncated even further.

In summary, in the conventional PCM recording and reproducing apparatus described only twelve blocks can be taken as the cross-fading section for accommodating hand cut editing. The apparatus described cannot cope with a situation where a longer cross-fading time is required.

A different arrangement of data words and error correction codes is disclosed in GB-A-2082356 (Reference 2). As therein disclosed the PCM data is arranged in the order of even data words, error correction codes, and odd data words. The application of this arrangement to splice editing of PCM recorded tape is suggested. The PCM data sequence is divided into even data and odd data sequences and separate error correction encoding is provided with respect to each of these sequences. One of the data sequences is then delayed a predetermined time with respect to the other data sequence. The distance between adjacent odd words and the distance between adjacent even words is then increased by applying the disclosed technique to each sequence.

The present invention is intended as a solution to the problems aforesaid and as an alternative to the method, apparatus and formatted recording tape disclosed in Reference 2. In particular it is intended to increase the time interval over which cross-fading can be performed within a constraint of not increasing memory capacity.

A method of pulse code modulation (PCM) recording, a recording apparatus, a recording tape, and a reproducing apparatus each in accordance with the present invention are defined in claims 1, 6, 12 and 14. The preamble of each of these claims is directed to Reference 1.

In the preferred embodiment of the invention described below, the burst error correction ability is not lowered below that achieved in the arrangement described in Reference 1.

The above defined method is applicable not only to a situation where the error correction codes are separated into two equal numbers $n_1$, $n-n_1$ but in general. The most advantage effects are obtained when the first delay $d_1$ and the incremental interleave delay, third delay $d_3$ are related as follows: $d_1 = (n-n_1) \times d_3$ with the proviso that the second time shift delay $d_2$ and the incremental interleave third delay $d_3$ are unequal

$$d_2 \neq d_3.$$

In the accompanying drawings:

Fig. 1 is a block diagram showing a multi-track PCM recording and reproducing apparatus of conventional construction;

Fig. 2 is a diagram showing a frame/block construction of a PCM recording and reproducing apparatus which is known and which is employed in the preferred embodiment;

Fig. 3 is a diagram showing a conventional time shift and interleave pattern for the arrangement of data on tape;

Fig. 4 is a diagram showing an encoding and data interleaving sequence for the pattern shown in the previous figure;

Fig. 5 is a block diagram showing an encoder circuit of a conventional PCM recording and reproducing apparatus;

Fig. 6 is a diagram showing how signal can be reproduced when handcut editing has been performed;

Fig. 7 is a diagram showing a time shift and interleave pattern embodying the present invention; and

Fig. 8 is a diagram showing an encoding and data interleaving sequence for obtaining the pattern shown in the preceding figure.

A description of a preferred embodiment of the invention now follows. This description is given by way of example only.

In this preferred embodiment the frame and block construction adopted is that shown in and described with reference to figure 2.

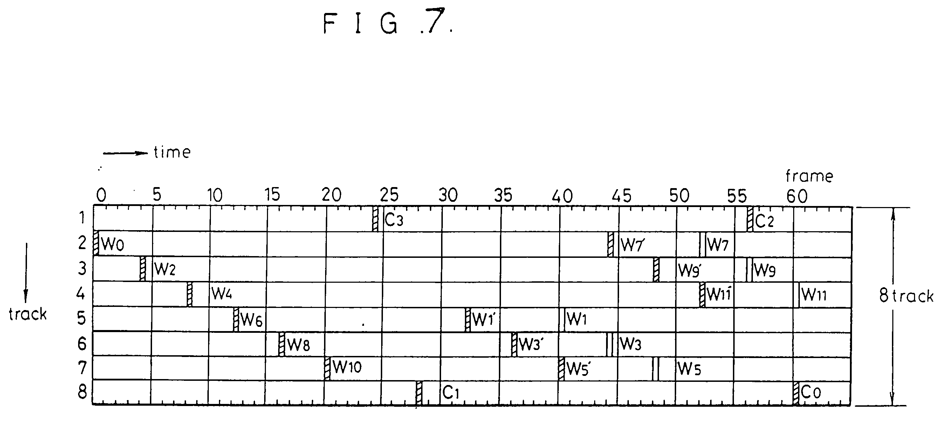

Figure 7 shows the time shift and interleave patent of PCM data recorded on tape. In the arrangement shown two C2 inspection data, i.e. error correction codes $C_3$ and $C_1$ are arranged following all six of the dispersed even data words $W_0$, $W_2$, ..., $W_{10}$. Each of the even data words and these two error correction codes are spaced by four frame/block intervals each. After a delay of a further twelve frame/block intervals error correction code $C_1$ is followed by the first even data word $W_1$. All six odd data words follow from this point in time at equal intervals of four frame/block spacing. The remainder two inspection data, i.e. correction codes $C_2$ and $C_0$ also are delayed and are coincident with the last but one and last of the six odd data words, i.e. data words $W_9$ and $W_{11}$. It will be noted that the spacing between the last even word $W_{10}$ and the first odd word $W_1$ amounts to as many as 20 frame/block intervals, i.e. 100 T. This it will be noted is a much increased period available for cross-fading.

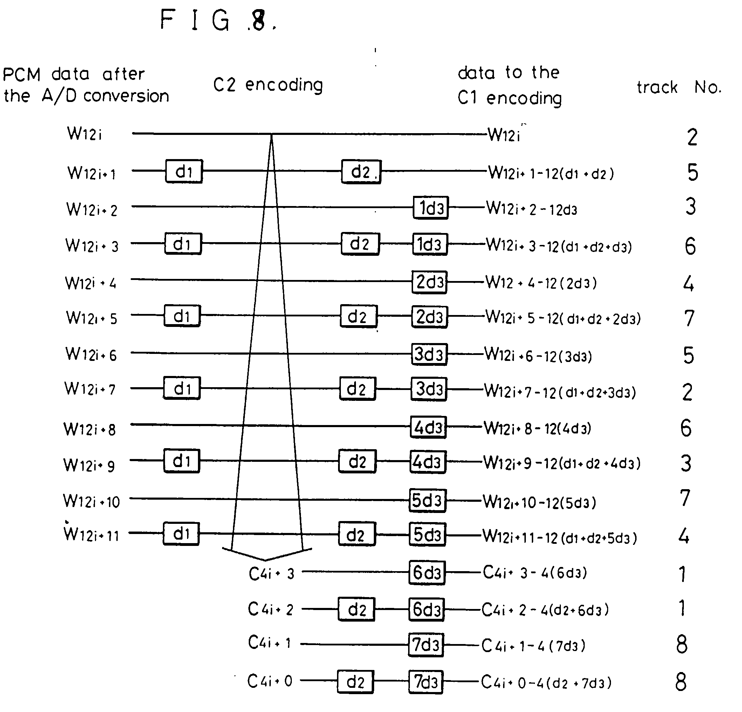

The method of generating the data pattern of figure 7 will now be described with reference to figure 8 which shows the encoding and the data interleaving sequence of this embodiment.

First even data words ($W_{12i}$, $W_{12i+2}$, .., $W_{12i+10}$) and odd data words ($W_{12i+1}$, $W_{12i+3}$, .., $W_{12i+11}$) are separated by a first delay of $d_1$ which is applied alternately to the sequence of data words $W_{12i}$ to $W_{12i+11}$. In figure 7, the antecedent odd data words, i.e. those which precede each of the odd data words $W_{12i+1}$, $W_{12i+3}$, .. $W_{12i+11}$, are denoted by dashes: $W_1'$, $W_3'$, ... $W_{11}'$; ... Following this C2 encoding is conducted against the even data and the antecedent odd data and a number n, in this embodiment n=4, of C2 inspection data, i.e. error correction codes $C_{4i+3}$, $C_{4i+2}$, $C_{4i+1}$, and $C_{4i}$ are generated. Subsequently a further and second time delay $d_2$ is given to the delayed odd data $W_{12i+1}$, $W_{12i+3}$, .., $W_{12i+11}$ and a selected number ($n-n_1$), in this embodiment two, of the $C_2$ inspection data, i.e. two correction codes $C_{4i+2}$ and

$C_{4i}$. Subsequently integer multiple increments of the interleave and third delay $d_3$ integer multiples 0 to 7 as shown in figure 8 to obtain the data arrangement shown in figure 7. The pattern of data interleaving is repeated once every twelve data words. It is noted that the increment multiples of the interleave delay $d_3$ applied increases monotonically from 0 to 6 for each succession i of six even data words $W_{12i}$, $W_{12i+2}$, .., $W_{12i+10}$ and the succession i of the alternate six delayed and further delayed odd data words $W_{12i+1}$, $W_{12i+3}$, .., $W_{12i+11}$. Incremented interleave delays of three $d_3$ are applied to two of the error correction codes $C_{4i}$ and $C_{4i+1}$ and multiple increment delays of seven $d_3$ are applied to the remainder two error correction codes $C_{4i+2}$ and $C_{4i+3}$. In this embodiment each word comprises 32 bits composed of 16 bits from each two channels. The sequence shown in figure 8 is repeated $5 = 320/(2 \times 16 \times 2)$ times per frame because two words $W_{12i}$ and $W_{12i+7}$ are arranged on each track. As in the prior art sequence discussed above, the post encoding time shift delay, second time delay $d_2$ and the incremental interleave delay $d_3$ have values 160 T and 20 T. The pre-encoding time shift delay, first delay $d_1$ is of a different value, having the value 40 T.

The encoder circuit for obtaining such a modified data arrangement is obtained merely by changing the memory control circuit 66 of the encoder circuit 3 shown in figure 5 and previously described. This memory control circuit 66 is changed so that the time shift and interleave delays of figure 8 are applied. The memory capacity for storing the process data remains 61 blocks and there is therefore no need to change the memory 65 for one of larger memory capacity. Furthermore the decoder circuit 34 can be easily obtained by constituting a sequence which is the reverse to that shown in figure 8.

The PCM recording and reproducing apparatus just described has the following properties. That is, the burst error correction ability amounts to sixteen block errors as before. The cross fade period of the splice is increased to 20 blocks interval between the last even data word $W_{10}$ and the first odd data word $W_1$, a notable improvement. For a sample frequency of 48 kHz this is an interval of 25 milliseconds and this is 1.7 times that obtained previously by the conventional device.

As is evident from the foregoing description, the C2 inspection data are separately arranged at equal intervals ($d_3$) in two groups, one group subsequent to all six even data words and the other group subsequent to all six antecedent odd data words. The odd data words are spaced an optimum distance apart from the even data words. The implementing apparatus has no greater memory capacity yet is capable of obtaining optimum burst error correction and results in an increase in the interval available for cross-fading.

In the preferred embodiment just described, the number $n_1$ of the C2 inspection data arranged subsequent to all six even data words and the number $n - n_1$ arranged subsequent to all six antecedent odd data words are equal in number and $d_1$ is equal to twice $d_3$.

Even where the subdivision of C2 inspection data i.e. error correction codes is unequal similar effects can be obtained. Notably, under the constraint of a constant memory capacity, i.e. $d_1 \gg (n-n_1) \times d_3$, optimum effects are obtained when the first time delay $d_1$ and the third time delay $d_3$ are related as follows:

$d_1 = (n - n_1) \times d_3$. This is subject to the proviso that the second and third time delays are unequal:

$d_2 \neq d_3$.

By the way as the C2 error correction code a Reed Solomon code on a Galoia field $(2^8)$ dealing with eight bits as a unit (a symbol) is used. The codes which are adopted in DAT (digital audio tape) text are equivalent ones to this Reed Solomon code. When the bit number of one symbol is increased the single processing ability of the error correction encoder and decoder are enhanced, but adversely the size of the hardware is enlarged. When GF $(2^{10})$ is used instead of GF $(2^8)$ the size of the hardware becomes about four times larger, and this is impractical. Accordingly, usually a code of eight bits per symbol is used. However, the code interleaving must be conducted at a word unit as described above, and the relationship between the word and the symbol should be considered in conducting the interleaving.

European Patent No. 0220033 pursuant to application No. 86307872.1, the parent patent application hereof, concerns a pulse code modulated (PCM) data recording apparatus in which sampling frequency and frame frequency signals are derived from a common master clock circuit.

## Claims

1. A method of recording digital audio signals onto a recording tape, in which method pulse code modulated (PCM) data words are recorded onto a number Tr of tape tracks and pulse code modulated error correction codes are recorded onto a plurality of other tape tracks, which method comprises:

applying alternately a first time delay $d_1$, $d_1 \neq 0$, to a succession of digital data words ($W_{12i}$ to $W_{12i+11}$ : i = 0,1,...) to introduce a time shift between even words ($W_{12i}$, $W_{12i+2}$, .., $W_{12+10}$ : i = 0, 1, ...) and odd words ($W_{12i+1}$, $W_{12i+3}$ .. $W_{12i+11}$ : 1 = 0,1,...);
encoding the even words ($W_{12i}$, $W_{12i+2}$, ..., $W_{12i+10}$ : i = 0, 1, ...) and the delayed odd words ($W_{12i+1}$, $W_{12i+3}$,..., $W_{12i+11}$ : i = 0,1,...) to generate a plurality n of error correction codes ($C_{4i}$ to $C_{4i+3}$ : i = 0; i=1; ...) for each succession of 2 Tr digital data words ($W_{12i}$ to $W_{12i+11}$ : i = 0; i=1; ..);
applying a second and further time delay $d_2$ to the delayed odd words ($W_{12i+1}$, $W_{12i+3}$, ..., $W_{12i+11}$ : i = 0,1) to introduce a further time shift between the even words ($W_{12i}$, $W_{12i+2}$, .., $W_{12i+10}$ : i = 0,1,..) and the odd words ($W_{12i+1}$,

$W_{12i+3}, .., W_{12i+11} : i = 0,1,..);$

applying a convolutional interleave to the even words $(W_{12i}, W_{12i+2}, .., W_{12i+10} : i = 0,1,..)$ and the same convolutional interleave to the odd words $(W_{12i+1}, W_{12i+3}, .., W_{12i+11} : i = 0,1,..)$ in which convolutional interleave, respective different interleave delays are applied to respective even words $(W_{12i}, W_{12i+2}, .., W_{12i+10} : i =0,1,..)$ and to respective further delayed odd words $(W_{12i+1}, W_{12i+3}, .., W_{12i+11} : i = 0,1,..)$, the respective different interleave delays differing by integer multiple increments of a third time delay $d_3$;

applying respective delays between the error correction codes $(C_{4i}$ to $C_{4i+3} : i = 0,1,...)$ to introduce time shift and to effect interleave;

sharing each plurality Tr of interleaved even words $(W_{12i}, W_{12i+2}, .., W_{12i+10} : i = 0; i = 1; ..)$ and each plurality Tr of time-shifted and interleaved odd words $(W_{12i+1}, W_{12i+2}, .., W_{12i+10} : i = 0; i = 1; ..)$ amongst Tr channels;

sharing each plurality n of interleaved error correction codes amongst a plurality of other channels;

pulse code modulating and amplifying the words $(W_{12i}; W_{12i+1}; ...; W_{12i+11} : i = 0,1, ..)$ in each of the Tr channels, and the codes $(C_{4i}; C_{4i+2}; C_{4i+1}; C_{4i+3} : i = 0, 1, ..)$ in each other channel; and

recording the modulated and amplified words $(W_{12i}; W_{12i+1}; ...; W_{12i+11} : i = 0,1,...)$ and codes $(C_{4i}, C_{4i+2}; C_{4i+1}, C_{4i+3} : i = 0,1,...)$ together with synchronisation and control signals and error detection codes frame-by-frame, on respective and corresponding ones of the Tr Tape tracks and the other tape tracks;

which method is characterised in that:

the convolutional interleave applied to the even words $(W_{12i}, W_{12i+2}, ..., W_{12i+10} : i = 0; 1; ..)$ and the further delayed odd words $(W_{12i+1}, W_{12i+1}, .., W_{12i+11} : i = 0; 1; ...)$ and the respective delays applied to the error correction codes $(C_{4i}$ to $C_{4i+3} : i = 0;1; ...)$ are such that the PCM data words $(W_{12i}$ to $W_{12i+11} : i = 0; 1; ...)$ and error correction codes $(C_{4i}$ to $C_{4i+3} : i = 0;1;)$ are arranged in a consecutive order of Tr respective even words $(W_{12i}, W_{12i+2}, .. W_{12i+10})$, an integer number $n_1 : 0 \leq n_1 < n$ of each respective plurality n of the error correction codes $(C_{4i}$ to $C_{4i+3} : i = 0; i = 1; ..)$, Tr antecedent odd words $(W'_{12i+1}, W'_{12i+3}, ..W'_{12i+11})$ which precede each respective one of said respective Tr odd words $(W_{12i+1}, W_{12i+3}, ..W_{12i+11})$by said first time delay $d_1$, and the remainder number $n-n_1$, of each respective plurality n of said error correction codes $(C_{4i}$ to $C_{4i+3} : i = 0; i = 1; ...)$ at delays which differ by one unit increment of said third time delay $d_3$ under a constraint that no increase in memory capacity is required : $d_1 \gg (n-n_1) d_3$.

2.  A method as claimed in claim 1 wherein:

    the first, second and third delays, $d_1$, $d_2$ and $d_3$ respectively are related as follows:

    $$d_1 = (n-n_1) d_3;$$

    $$d_2 \neq d_3.$$

3.  A method as claimed in claim 2 wherein:
    the number $n_1$, and the remainder number $n-n_1$ of error correction codes $(C_{4i}$ to $C_{4i+3} : i=0; i=1; ...)$ are equal.

4.  A method as claimed in claim 3 wherein $n=4$, $n_1 = n-n_1 = 2$ and $d_1 = 2d_3$.

5.  A method as claimed in claim 4 wherein:

    $$Tr=6; d_1 = 40[T]; d_2 = 160[T]; \& d_3 = 20 [T];$$

    where T is the period of the convolutional interleave which is performed for each succession $2Tr=12$ of consecutive data words $(W_{12i}$ to $W_{12i+11} : i=0; i=1;..)$.

6.  Recording apparatus for recording digital audio signals onto a recording tape and by which means pulse code modulated (PCM) data words can be recorded onto a number of tape tracks and pulse code modulated (PCM) error correction codes can be recorded onto a plurality of other tape tracks, which apparatus comprises:

    first time delay means (65,66) for applying alternately a first time delay $d_1$, $d_1 \neq 0$, to a succession of digital data words $(W_{12i}$ to $W_{12i+11} : i = 0,1,...)$ to introduce a time shift between even words $(W_{12i}, W_{12i+2}, .., W_{12+10} : i=0, 1, ...)$ and odd words $(W_{12i+1}, W_{12i+3}, .. W_{12i+11} : i = 0,1, ...)$;

    encoding means (68), responsive to said first time delay means, for encoding the even words $(W_{12i}, W_{12i+2}, ..., W_{12i+10} : i = 0, 1, ...)$ and the delayed odd words $(W_{12i+1}, W_{12i+3}, ..., W_{12i+11} : i = 0,1,...)$ to generate a plurality n of error correction codes $(C_{4i}$ to $C_{4i+3} : i = 0; i=1; ...)$ for each succession of 2 Tr digital data words $(W_{12i}$ to $W_{12i+11} : i = 0; i=1; ..)$;

    second time delay means (65,66), responsive to said first time delay means (65,66) for applying a second and further time delay $d_2$ to the delayed odd words $(W_{12i+1}, W_{12i+3}, ..., W_{12i+11} : i = 0,1)$ to introduce a further time shift between the even words $(W_{12i}, W_{12i+2}, .., W_{12i+10} : i = 0,1,..)$ and the odd words $(W_{12i+1},$

$W_{12i+3}, .., W_{12i+11} : i = 0,1,..)$;
interleave means (65,66), responsive to said second time delay means, for applying a convolutional interleave to the even words ($W_{12i}, W_{12i+2}, .., W_{12i+10} : i = 0,1,..$) and the same convolutional interleave to the odd words ($W_{12i+1}, W_{12i+3}, .., W_{12i+11} : i = 0,1, ..$) in which convolutional interleave, respective different interleave delays are applied to respective even words ($W_{12i}, W_{12i+2}, .., W_{12i+10} : i = 0,1,..$) and to respective further delayed odd words ($W_{12i+1}, W_{12i+3}, .., W_{12i+11} : i = 0,1,..$), the respective different interleave delays differing by integer multiple increments of a third time delay $d_3$;

error correction code delay means (65,66) responsive to said encoding means (68) for applying respective delays between the error correction codes ($C_{4i}$ to $C_{4i+3} : i = 0,1,...$) to introduce time shift and to effect interleave;

track-sharing means (12) connected to said interleave means and said error correction code delay means (65,66) for sharing each plurality Tr of interleaved even words ($W_{12i}, W_{12i+2}, .., W_{12i+10} : i = 0; i = 1; ..$) and each plurality Tr of time-shifted and interleaved odd words ($W_{12i+1}, W_{12i+2}, .., W_{12i+2}, .., W_{12i+10} : i = 0; i = 1; ..$) amongst Tr channels and for sharing each plurality n of interleaved error correction codes amongst a plurality of other channels; and

a plurality Tr channels and other channels, connected to said track-sharing means (12) each including PCM modulation means (13-15), amplification means (16-18) and a recording head (19-21);

which apparatus is characterised in that:

said first time delay means (65,66), said interleave means (65,66) and said error correction code means (65,66) are adapted such that the PCM data words ($W_{12i}$ to $W_{12i+11} : i = 0; 1; ...$) and error correction codes ($C_{4i}$ to $C_{4i+3} : i = 0;1;$) are arranged in a consecutive order of Tr respective even words ($W_{12i}, W_{12i+2}, ..W_{12i+10}$), an integer number $n_1 : 0 \leq n_1 < n$ of each respective plurality n of the error correction codes ($C_{4i}$ to $C_{4i+3} : i = 0; i = 1; ..$), Tr antecedent odd words ($W'_{12i+1}, W'_{12i+3}, ..W'_{12i+11}$) which precede each respective one of said respective Tr odd words ($W_{12i+1}, W_{12i+3}, ..W_{12i+11}$) by said first time delay $d_1$, and the remainder number n-n, of each respective plurality n of said error correction codes ($C_{4i}$ to $C_{4i+3} : i = 0; i = 1; ...$) at delays which differ by one unit increment of said third time delay $d_3$ under a constraint that no increase in memory capacity is required : $d_1 \not> (n-n_1) d_3$.

7. Recording apparatus as claimed in claim 6 wherein:
the first and second time delay means (65,66) are operable to apply delays $d_1$ & $d_2$ respectively and the interleave means (65,66) is operable to apply consecutive delays differing by one unit increment of the third delay $d_3$, which delays $d_1, d_2, d_3$ are related as follows:

$$d_1 = (n-n_1) d_3;$$

$$d_2 \neq d_3.$$

8. Recording apparatus as claimed in claim 7 wherein said error correction code delay means (65,66) is operable to apply respective delays such that number $n_1$ and remainder number $n-n_1$ of each number n of the error correction codes ($C_{4i}$ to $C_{4i+3}$; i=0; i=1; ..) are equal.

9. Recording apparatus as claimed in claim 8 wherein $n=4$, $n_1 = n-n_1 = 2$ and $d_1 = 2d_3$.

10. Recording apparatus as claimed in claim 9 wherein Tr=6; $d_1 = 40[T]$; $d_2 = 160[T]$; & $d_3 = 20 [T]$; where T is the period of the convolutional interleave which is performed for each succession 2Tr=12 of consecutive data words ($W_{2i}$ to $W_{12i+11} : i=0; i=1;..$).

11. Recording apparatus as claimed in any one of the preceding claims 6 to 10 wherein:
said first and second time delay means, said interleave means, and said error correction code delay means, consist in a memory (65) and a memory control (66) arranged to control said memory (65).

12. A recording tape having a plurality Tr of tracks on which are recorded PCM data words ($W_{12i}$ to $W_{12i+11} : i = 0,1,..$) representing digital audio signals and a plurality of other tracks on which are recorded PCM error correction codes, ($C_{4i}$ to $C_{4i+3} : i=0,1,..$)

wherein on each track respective pluralities of the PCM data words ($W_{12i}$ to $W_{12i+1} : i=0,1,..$) and the PCM error correction codes ($C_{4i}$ to $C_{4i+3} : i=0,1,..$) are preceded by respective synchronisation and control signals and followed by respective error detection codes and constitute respective frames, in which frames PCM data words ($W_{12i}$ to $W_{12i+1} : i=0,1,..$) and PCM correction codes ($C_{4i}$ to $C_{4i+3} : i=0,1,..$) are dispersed in accordance with an interleave pattern, characterised in that:

said PCM data words ($W_{12i}$ to $W_{12i+11} : i = 0; i = 1; ..$) and PCM correction codes ($C_{4i}$ to $C_{4i+3} : i = 0; i = 1; ...$) are dispersed in accordance with an interleave pattern in which they are arranged in a consecutive order of Tr respective even words ($W_{12i}, W_{12i+2}, ..W_{12i+10}$), an integer number $n_1 : 0 \leq n_1 < n$ of each respective plurality n of the error correction codes ($C_{4i}$ to $C_{4i+3}$ : i = 0; i = 1; ..), Tr antecedent odd words ($W'_{12i+1}$, $W'_{12i+3}$, ..$W'_{12i+11}$) which precede each respective one of said respective Tr odd words ($W_{12i+1}$, $W_{12i+3}$, ..$W_{12i+11}$) by said first time delay $d_1$, and the remainder number $n-n_r$ of each respective plurality n of said error correction codes ($C_{4i}$ to $C_{4i+3}$ : i = 0; i = 1; ...) at delays which differ by one unit increment of said third time delay $d_3$ under a constraint that no increase in memory capacity is required : $d_1 \not> (n-n_1) d_3$.

13. A recording tape as claimed in claim 12 having 8 tracks (1-8), on 6 (2-6) of which are recorded the PCM data words ($W_{12i}$ to $W_{12i+1}$ : i=0,1,..) and on 2 (1,8) of which are recorded the PCM error correction codes, ($C_{4i}$ to $C_{4i+3}$ : i=0,1,..) wherein

each of 6 even PCM data words ($W_{12i}$, $W_{12i+2}$, .., $W_{12i+10}$ : i=0; i=1; ..) are recorded on the second to seventh tracks (2-7) at intervals of 4 frames starting from each zeroth frame; two error correction codes ($C_{4i+3}$, $C_{4i+1}$ : i=0; i=1;..) for each of four error correction codes ($C_{4i}$ to $C_{4i+3}$ : i=o,i=1;..) encoded for 6 even and 6 odd PCM data words ($W_{12i}$ to $W_{12i+11}$ : i=0,i=1;..) are recorded on the first and eighth tracks (1,8) at intervals of four frames following each last even word ($W_{12i+10}$ : i=0;i=1; ..); each 6 odd PCM data words ($W_{12i+1}$, $W_{12i+3}$, $W_{12i+11}$ : i=0; i=1; ..) are recorded on the fifth to seventh tracks (5- 7) and second to fourth tracks (2-4) at intervals of four frames starting from each fortieth frame; and two remaining error correction codes ($C_{4i+2}$, $C_{4i}$ : i=0;i=1;..) for each of four codes ($C_{4i}$ to $C_{4i+3}$ : i=0; i=1;..) are recorded on the first and eighth tracks (1,8) at intervals of four frames ending at the sixtieth frame.

14. A pulse coded modulated data reproducing apparatus suitable for producing analogue signal from the recording tape claimed in claims 12 or 13, said apparatus comprising a decoder (34) operable to perform a sequence of operations that is the reverse of the sequence of operations of applying time delays, encoding, and interleaving specified in claim 1.

**Patentansprüche**

1. Verfahren zum Aufzeichnen digitaler Audiosignale auf ein Aufzeichnungsband, wobei bei diesem Verfahren pulscodemodulierte (PCM) Datenwörter auf eine Anzahl Tr von Bandspuren aufgezeichnet werden und pulscodemodulierte Fehlerkorrekturcodes auf eine Mehrzahl von anderen Bandspuren aufgezeichnet werden, wobei dieses Verfahren aufweist:

abwechselndes Anlegen einer ersten Zeitverzögerung $d_1$, $d_1 \neq 0$, an eine Folge von digitalen Datenwörtern ($W_{12i}$ bis $W_{12i+11}$ : i = 0,1,...), um eine Zeitverschiebung zwischen geraden Wörtern ($W_{12i}$, $W_{12i+2}$, .., $W_{12+10}$: i = 0, 1, ...) und ungeraden Wörtern ($W_{12i+1}$, $W_{12i+3}$, .. $W_{12i+11}$ : i = 0,1,...) einzufügen;
Codieren der geraden Wörter ($W_{12i}$, $W_{12i+2}$,..., $W_{12+10}$: i = 0, 1, ...) und der verzögerten ungeraden Wörter ($W_{12i+1}$, $W_{12i+3}$,..., $W_{12i+11}$: i = 0,1,...), um eine Mehrzahl n von Fehlerkorrekturcodes ($C_{4i}$ bis $C_{4i+3}$ : i = 0; i=1; ...) für jede Folge von 2 Tr digitalen Datenwörtern ($W_{12i}$ bis $W_{12i+11}$ : i = 0; i=1;..) zu erzeugen;
Anlegen einer zweiten und weiteren Zeitverzögerung $d_2$ an die verzögerten ungeraden Wörter ($W_{12i+1}$, $W_{12i+3}$, ..., $W_{12i+11}$ : i = 0,1), um eine weitere Zeitverschiebung zwischen den geraden Wörtern ($W_{12i}$, $W_{12i+2}$, .., $W_{12+10}$ : i=0,1,..) und den ungeraden Wörtern ($W_{12i+1}$, $W_{12i+3}$, .., $W_{12i+11}$ : i = 0,1,..) einzufügen;
Anwenden einer Faltungsschachtelung an den geraden Wörtern ($W_{12i}$, $W_{12i+2}$, .., $W_{12+10}$ : i = 0,1,...) und der gleichen Faltungsschachtelung an den ungeraden Wörtern ($W_{12i+1}$, $W_{12i+3}$, .., $W_{12i+11}$ : i = 0,1,..), wobei bei dieser Faltungsschachtelung jeweilige unterschiedliche Schachtelungsverzögerungen an die jeweiligen geraden Wörter ($W_{12i}$, $W_{12i+2}$, .., $W_{12+10}$ : i = 0,1,..) und an die jeweiligen weiterverzögerten ungeraden Wörter ($W_{12i+1}$, $W_{12i+3}$, .., $W_{12i+11}$ : i = 0,1,..) angelegt werden, wobei sich die jeweiligen unterschiedlichen Schachtelungsverzögerungen um ganzzahlenvielfache Inkremente einer dritten Zeitverzögerung $d_3$ unterscheiden;
Anlegen jeweiliger Verzögerungen zwischen den Fehlerkorrekturcodes ($C_{4i}$ bis $C_{4i+3}$ : i = 0,1,...), um eine Zeitverschiebung einzufügen und eine Schachtelung zu bewirken;
Aufteilen jeder Mehrzahl Tr von geschachtelten geraden Wörtern ($W_{12i}$, $W_{12i+2}$ $W_{12+10}$ : i = 0; i = 1; ..) und jeder Mehrzahl Tr von zeitverschobenen und geschachtelten ungeraden Wörtern ($W_{12i+1}$, $W_{12i+2}$ $W_{12i+10}$ : i = 0; i = 1; ..) zwischen Tr Kanälen;
Aufteilen jeder Mehrzahl n von geschachtelten Fehlerkorrekturcodes zwischen einer Mehrzahl von anderen Kanälen;
Pulscodemodulieren und Verstärken der Wörter ($W_{12i}$; $W_{12i+1}$; ...; $W_{12+11}$ : i = 0,1, ..) in jedem der Tr Kanäle und der Codes ($C_{4i}$, $C_{4i+2}$; $C_{4i+1}$; $C_{4i+3}$; : i = 0, 1, ..) in jedem anderen Kanal; und
Aufzeichnen der modulierten und verstärkten Wörter ($W_{12i}$; $W_{12i+1}$; ...; $W_{12+11}$ : i = 0,1,...) und Codes ($C_{4i}$, $C_{4i+2}$; $C_{4i+1}$, $C_{4i+3}$; : i = 0,1,...) zusammen mit Synchronisations- und Steuersignalen und Fehlererfassungscodes Rahmen-um-Rahmen auf jeweilige und entsprechende der Tr Bandspuren und der anderen Bandspuren;

wobei dieses Verfahren dadurch gekennzeichnet ist, daß:

die Faltungsschachtelung, die an den geraden Wörtern ($W_{12i}$, $W_{12i+2}$,..., $W_{12i+10}$: i = 0; 1; ..) und den weiterverzögerten ungeraden Wörtern ($W_{12i+1}$, $W_{12i+1}$, .., $W_{12i+11}$ : i = 0; 1; ...) angewendet wird, und die jeweiligen Verzögerungen, die an die Fehlerkorrekturcodes ($C_{4i}$ bis $C_{4i+3}$ : i = 0;1; ...) angelegt werden, so sind, daß die PCM-Datenwörter ($W_{12i}$, .$W_{12i+11}$ : i = 0; 1; ...) und Fehlerkorrekturcodes ($C_{4i}$ bis $C_{4i+3}$ : i = 0;1;) in einer aufeinanderfolgenden Reihenfolge von Tr jeweiligen geraden Wörtern ($W_{12i}$, $W_{12i+2}$, ..$W_{12i+10}$), einer ganzzahligen Anzahl $n_1$ : $0 \leq n_1 < n$ von jeder jeweiligen Mehrzahl der Fehlerkorrekturcodes ($C_{4i}$ bis $C_{4i+3}$ : i = 0; i = 1; ..), Tr vorherigen ungeraden Wörtern ($W'_{12i+1}$, $W'_{12i+3}$, ..$W'_{12i+11}$), welche jedem jeweiligen der jeweiligen Tr ungeraden Wörter ($W_{12i+1}$, $W_{12i+3}$, ..$W_{12i+11}$) um die erste Zeitverzögerung $d_1$ vorhergehen, und der restlichen Anzahl $n-n_1$ von jeder jeweiligen Mehrzahl n von Fehlerkorrekturcodes ($C_{4i}$ bis $C_{4i+3}$ : i = 0; i = 1; ...) mit Verzögerungen, welche sich um ein Einheitsinkrement der dritten Zeitverzögerung $d_3$ unterscheiden, unter einer Bedingung angeordnet sind, daß keine Erhöhung der Speicherkapazität benötigt wird : $d_1 \gg (n-n_1) d_3$.

2. Verfahren nach Anspruch 1, bei dem:

die ersten, zweiten und dritten Verzögerungen $d_1$, $d_2$ bzw. $d_3$ wie folgt verknüpft sind:

$$d_1 = (n-n_1) d_3;$$

$$d2 \neq d_3.$$

3. Verfahren nach Anspruch 2, bei dem:

die Anzahl $n_1$ und die restliche Anzahl $n-n_1$ von Fehlerkorrekturcodes ($C_{4i}$ bis $C_{4i+3}$: i=0; i=1; ...) gleich sind.

4. Verfahren nach Anspruch 3, bei dem n=4, $n_1 = n-n_1 = 2$ und $d_1 = 2d_3$ ist.

5. Verfahren nach Anspruch 4, bei dem:

Tr=6; $d_1 = 40[T]$; $d_2 = 160[T]$; & $d_3 = 20 [T]$ ist; wobei T die Periode der Faltungsschachtelung ist, welche für jede Folge 2Tr = 12 von aufeinanderfolgenden Datenwörtern ($W_{12i}$ bis $W_{12i+11}$ : i=0; i=1;..) durchgeführt wird.

6. Aufzeichnungsvorrichtung zum Aufzeichnen digitaler Audiosignale auf ein Aufzeichnungsband, wobei mit dieser Einrichtung pulscodemodulierte (PCM) Datenwörter auf eine Anzahl von Bandspuren aufgezeichnet werden können und pulscodemodulierte (PCM) Fehlerkorrekturcodes auf eine Mehrzahl von anderen Bandspuren aufgezeichnet werden können, wobei diese Vorrichtung aufweist:

eine erste Zeitverzögerungseinrichtung (65,66) die abwechselnd eine erste Zeitverzögerung $d_1$, $d_1 \neq 0$, an eine Folge von digitalen Datenwörtern ($W_{12i}$ bis $W_{12i+11}$ : i = 0,1,...) anlegt, um eine Zeitverschiebung zwischen geraden Wörtern ($W_{12i}$, $W_{12i+2}$, .., $W_{12+10}$ : i = 0, 1, ...) und ungeraden Wörtern ($W_{12i+1}$, $W_{12i+3}$, .. $W_{12i+11}$ : i = 0,1,...) einzufügen;

eine Codiereinrichtung (68), die auf die erste Zeitverzögerungseinrichtung reagiert und die geraden Wörter ($W_{12i}$, $W_{12i+2}$, ..., $W_{12i+10}$ : i = 0, 1, ...) und die verzögerten ungeraden Wörter ($W_{12i+1}$, $W_{12i+3}$,..., $W_{12i+11}$ : i = 0,1,...) codiert, um eine Mehrzahl n von Fehlerkorrekturcodes ($C_{4i}$ bis $C_{4i+3}$ : i = 0; i=1; ...) für jede Folge von 2 Tr digitalen Datenwörtern ($W_{12i}$ bis $W_{12i+11}$ : i = 0, i=1; ..) zu erzeugen;

eine zweite Zeitverzögerungseinrichtung (65,66) die auf die erste Zeitverzögerungseinrichtung (65,66) reagiert und die eine zweite und weitere Zeitverzögerung $d_2$ an die verzögerten ungeraden Wörter ($W_{12i+1}$, $W_{12i+3}$, ..., $W_{12i+11}$ : i = 0,1,) anlegt, um eine weitere Zeitverschiebung zwischen den geraden Wörtern ($W_{12i}$, $W_{12i+2}$, .., $W_{12i+10}$ : i = 0,1,..) und den ungeraden Wörtern ($W_{12i+1}$, $W_{12i+3}$, ..., $W_{12i+11}$ : i = 0,1,..) einzufügen;

eine Schachtelungseinrichtung (65,66), die auf die zweite Zeitverzögerungseinrichtung reagiert und die eine Faltungsschachtelung an den geraden Wörtern ($W_{12i}$, $W_{12i+2}$, .., $W_{12i+10}$ : i = 0,1,..) und die gleiche Faltungsschachtelung an den ungeraden Wörtern ($W_{12i+1}$, $W_{12i+3}$, ..., $W_{12i+11}$ : i = 0,1,..) anwendet, wobei bei dieser Faltungsschachtelung jeweilige unterschiedliche Schachtelungsverzögerungen an die jeweiligen geraden Wörter ($W_{12i}$, $W_{12i+2}$, .., $W_{12i+10}$ : i = 0,1,..) und die jeweiligen weiterverzögerten ungeraden Wörter ($W_{12i+1}$, $W_{12i+3}$, ..,$W_{12i+11}$ : i = 0,1,..) angelegt werden, wobei sich diese jeweiligen unterschiedlichen Schachtelungsverzögerungen um ganzzahlenvielfache Inkremente einer dritten Zeitverzögerung $d_3$ unterscheiden;

eine Fehlerkorrekturcode-Verzögerungseinrichtung (65,66), die auf die Codiereinrichtung (68) reagiert und die jeweilige Verzögerungen zwischen den Fehlerkorrekturcodes ($C_{4i}$ bis $C_{4i+3}$ : i = 0,1;...) anlegt, um eine Zeitverschiebung einzufügen und eine Schachtelung zu bewirken;

eine Spuraufteilungseinrichtung (12), die an die Schachtelungseinrichtung und die Fehlerkorrekturcode-Verzögerungseinrichtung (65,66) angeschlossen ist, die jede Mehrzahl Tr von geschachtelten geraden Wörtern ($W_{12i}$, $W_{12i+2}$, .., $W_{12i+10}$ : i = 0; i = 1; ..) und jede Mehrzahl Tr von zeitverschobenen und geschachtelten ungeraden Wörtern ($W_{12i+1}$, $W_{12i+2}$, .., $W_{12i+2}$, .., $W_{12i+10}$ : i = 0; i = 1; ..) zwischen Tr Kanälen aufteilt und die jede Mehrzahl n von geschachtelten Fehlerkorrekturcodes zwischen einer Mehrzahl von anderen Kanälen aufteilt; und

eine Mehrzahl Tr Kanäle und andere Kanäle, die an Spuraufteilungseinrichtungen (12) angeschlossen sind, von denen jede eine PCM-Modulationseinrichtung (13-15), eine Verstärkungseinrichtung (16-18) und einen Aufzeichungskopf (19-21) beinhaltet;

wobei diese Vorrichtung dadurch gekennzeichnet ist, daß:

die erste Verzögerungseinrichtung (65,66), die Schachtelungseinrichtung (65,66) und die Fehlerkorrekturcodeeinrichtung (65,66) so angeordnet sind, daß die PCM-Datenwörter ($W_{12i}$ bis $W_{12i+11}$ : i = 0; 1; ...) und Fehlerkorrekturcodes ($C_{4i}$ bis $C_{4i+3}$ : i = 0;1;) in einer aufeinanderfolgenden Reihenfolge von Tr jeweiligen geraden Wörtern ($W_{12i}$, $W_{12i+2}$, ..$W_{12i+10}$), einer ganzzahligen Anzahl $n_1$ : $0 \le n_1 < n$ jeder jeweiligen Mehrzahl n der Fehlerkorrekturcodes ($C_{4i}$ bis $C_{4i+3}$ : i = 0; i = 1; ..), Tr vorherigen ungeraden Wörtern ($W'_{12i+1}$, $W'_{12i+3}$, ..$W'_{12i+11}$), welche jedem jeweiligen der jeweiligen Tr ungeraden Wörter ($W_{12i+1}$, $W_{12i+3}$, ..$W_{12i+11}$) um die erste Zeitverzögerung $d_1$ vorhergehen, und der restlichen Anzahl n-n von jeder jeweiligen Mehrzahl n von Fehlerkorrekturcodes ($C_{4i}$ bis $C_{4i+3}$ : i = 0; i = 1; ...) mit Verzögerungen, welche sich um ein Einheitsinkrement der dritten Zeitverzögerung $d_3$ unterscheiden, unter einer Bedingung angeordnet sind, daß keine Erhöhung der Speicherkapazität benötigt wird : $d_1 \ngtr (n-n_1) d_3$.

7. Aufzeichnungsvorrichtung nach Anspruch 6, bei der:

die erste und zweite Zeitverzögerungseinrichtung (65,66) so betrieben werden, daß sie Verzögerungen $d_1$ bzw. $d_2$ anlegen und die Schachtelungseinrichtung (65,66) so betrieben wird, daß sie aufeinanderfolgende Verzögerungen anlegt, die sich um ein Einheitsinkrement der dritten Verzögerung $d_3$ unterscheiden, wobei die Verzögerungen $d_1$, $d_2$, $d_3$ wie folgt verknüpft sind:

$$d_1 = (n-n_1) d_3;$$

$$d_2 \ne d_3.$$

8. Aufzeichnungsvorrichtung nach Anspruch 7, bei der die Fehlerkorrekturcode-Verzögerungseinrichtung (65,66) so betrieben wird, daß sie jeweilige Verzögerungen so anlegt, daß eine Anzahl $n_1$ und eine restliche Anzahl n-n$_1$ jeder Anzahl n der Fehlerkorrekturcodes ($C_{4i}$ bis $C_{4i+3}$ : i=0; i=1; ..) gleich sind.

9. Aufzeichnungsvorrichtung nach Anspruch 8, bei der n=4, $n_1$ = n-n$_1$ =2 und $d_1$ = 2d$_3$ ist.

10. Aufzeichnungsvorrichtung nach Anspruch 9, bei der Tr=6; $d_1$ = 40[T]; $d_2$ = 160[T]; & $d_3$ = 20 [T] ist; wobei T die Periode der Faltungsschachtelung ist, welche für jede Folge 2Tr=12 von aufeinanderfolgenden Datenwörtern ($W_{2i}$ bis $W_{12i+11}$ : i=0; i=1;..) durchgeführt wird.

11. Aufzeichnungsvorrichtung nach einem der vorhergehenden Ansprüche 6 bis 10, bei der:

die erste und zweite Zeitverzögerungseinrichtung, die Schachtelungseinrichtung und die Fehlerkorrekturcode-Verzögerungseinrichtung aus einem Speicher (65) und einer Speichersteuerung (66) bestehen, die angeordnet ist, um den Speicher (65) zu steuern.

12. Aufzeichnungsband, das eine Mehrzahl Tr von Spuren, auf welche PCM-Datenwörter ($W_{2i}$ bis $W_{12i+11}$ : i = 0,1,..) aufgezeichnet werden, die digitale Audiosignale darstellen, und eine Mehrzahl von anderen Spuren aufweist, auf welche PCM-Fehlerkorrekturcodes ($C_{4i}$ bis $C_{4i+3}$ : i =0,1,..) aufgezeichnet werden,

bei dem auf jeder Spur jeweilige Mehrzahlen der PCM-Datenwörter ($W_{2i}$ bis $W_{12i+1}$ : i =0,1,..) und der PCM-Fehlerkorrekturcodes ($C_{4i}$ bis $C_{4i+3}$ : i =0,1,..) von jeweiligen Synchronisations- und Steuersignalen vorangegangen werden und von jeweiligen Fehlererfassungscodes gefolgt werden und jeweilige Rahmen bilden, wobei in diesen Rahmen PCM-Datenwörter ($W_{2i}$ bis $W_{12i+1}$ : 1 = 0,1,..) und PCM-Korrekturcodes ($C_{4i}$ bis $C_{4i+3}$ : i=0,1,..) in Übereinstimmung mit einem Schachtelungsmuster verteilt sind,

dadurch gekennzeichnet, daß:

die PCM-Datenwörter ($W_{2i}$ bis $W_{12i+11}$ : i = 0; i =1; ..) und PCM-Korrekturcodes ($C_{4i}$ bis $C_{4i+3}$ : i = 0; i = 1; ...) in Übereinstimmung mit einem Schachtelungsmuster verteilt sind, in welchem sie in einer aufeinanderfolgenden Reihenfolge von Tr jeweiligen geraden Wörtern ($W_{12i}$, $W_{12i+2}$, ..$W_{12i+10}$), einer ganzzahligen Anzahl

$n_1 : 0 \leq n_1 < n$ von jeder jeweiligen Mehrzahl n der Fehlerkorrekturcodes ($C_{4i}$ bis $C_{4i+3}$ : i = 0; i = 1; ..), Tr vorherigen ungeraden Wörtern ($W'_{12i+1}$, $W'_{12i+3}$, ..$W'_{12i+11}$), welche jedem jeweiligen der jeweiligen Tr ungeraden Wörter ($W_{12i+1}$, $W_{12i+3}$, ..$W_{12i+11}$) um die erste Zeitverzögerung $d_1$ vorhergehen, und der restlichen Anzahl n-n von jeder jeweiligen Mehrzahl n von Fehlerkorrekturcodes ($C_{4i}$ bis $C_{4i+3}$ : i = 0; i = 1; ...) mit Verzögerungen, welche sich um ein Einheitsinkrement der dritten Zeitverzögerung $d_3$ unterscheiden, unter einer Bedingung angeordnet sind, daß keine Erhöhung der Speicherkapazität benötigt wird : $d_1 \gg (n-n_1) d_3$.

13. Aufzeichnungsband nach Anspruch 12, das 8 Spuren (1-8) aufweist, wobei auf 6 (2-6) von ihnen PCM-Datenwörter ($W_{12i}$ bis $W_{12i+1}$ : i=0,1,..) aufgezeichnet werden und auf 2 (1,8) von ihnen die PCM-Fehlerkorrekturcodes ($C_{4i}$ bis $C_{4i+3}$ : i=0,1,..) aufgezeichnet werden, bei dem

alle 6 geraden PCM-Datenwörter ($W_{12i'}$, $W_{12i+2}$, .., $W_{12i+10}$ : i=0; i=1; ..) mit Intervallen von 4 Rahmen, die an jedem nullten Rahmen beginnen, auf die zweiten bis siebten Spuren (2-7) aufgezeichnet werden;
zwei Fehlerkorrekturcodes ($C_{4i+3}$, $C_{4i+1}$ : i=0; i=1;..) von allen vier Fehlerkorrekturcodes ($C_{4i}$ bis $C_{4i+3}$ : i=o,i=1;..), die für 6 gerade und 6 ungerade PCM-Datenwörter ($W_{12i}$ bis $W_{12i+11}$ : i=0,i=1;..) codiert werden, mit Intervallen von vier Rahmen, die jedem letzten geraden Wort ($W_{12i+10}$ : i=0;i=1;..) folgen, auf die ersten und achten Spuren (1,8) aufgezeichnet werden;
alle 6 ungeraden PCM-Datenwörter ($W_{12i+1'}$, $W_{12i+3}$, $W_{12i+11}$ : i=0; i=1; ..) mit Intervallen von vier Rahmen, die an jedem vierten Rahmen beginnen, auf die fünften bis siebten Spuren (5-7) und zweiten bis vierten Spuren (2-4) aufgezeichnet werden; und
zwei restliche Fehlerkorrekturcodes ($C_{4i+2}$, $C_{4i}$ : 1=0;i=1;..) von allen vier Codes ($C_{4i}$ bis $C_{4i+3}$ : i=0; i=1;..) mit Intervallen von vier Rahmen, die an dem sechsten Rahmen enden, auf die ersten und achten Spuren (1,8) aufgezeichnet werden.

14. Wiedergabevorrichtung für pulscodemodulierte Daten, die zum Erzeugen eines Analogsignals von dem Aufzeichnungsband nach Anspruch 12 oder 13 geeignet ist, wobei die Vorrichtung einen Decodierer (34) aufweist, der so betrieben wird, daß er eine Betriebsfolge durchführt, die die umgekehrte der im Anspruch 1 spezifizierten Betriebsfolge eines Anlegens von Zeitverzögerungen, eines Codierens und einer Schachtelung ist.

## Revendications

1. Procédé d'enregistrement de signaux audio numériques sur une bande d'enregistrement, dans lequel procédé des mots de données à modulation par impulsions codées (PCM) sont enregistrés sur un nombre Tr de pistes de bande et des codes de correction d'erreur à modulation par impulsion codée sont enregistrés sur un certain nombre d'autres pistes de bande, lequel procédé comprend :

appliquer alternativement un premier retard de temps $d_1$, $d_1 \neq 0$, à une succession de mots de données numériques ($W_{12i}$ à $W_{12i+11}$ : i = 0,1,...) pour introduire un décalage de temps entre des mots pairs ($W_{12i}$, $W_{12i+2}$, ..,$W_{12i+10}$ : i= 0, 1, ...) et des mots impairs ($W_{12i+1}$, $W_{12i+3}$, ..$W_{12i+11}$ : i = 0,1,...);
encoder les mots pairs ($W_{12i}$, $W_{12i+2}$,..., $W_{12i+10}$ : i = 0, 1, ...) et les mots impairs retardés ($W_{12i+1}$, $W_{12i+3}$,..., $W_{12i+11}$ : i = 0,1,...) pour produire un certain nombre n de codes de correction d'erreurs ($C_{4i}$ à $C_{4i+3}$ : i = 0; i=1; ...) pour chaque succession de 2 Tr mots de données numériques ($W_{12i}$ à $W_{12i+11}$ : i = 0; i=1; ..);
appliquer un second et autre retard de temps $d_2$ aux mots impairs retardés ($W_{12i+1}$, $W_{12i+3}$, ..., $W_{12i+11}$ : i = 0,1) pour introduire un autre décalage de temps entre les mots pairs ($W_{12i}$, $W_{12i+2}$, .., $W_{12i+10}$ : i = 0,1,..) et les mots impairs ($W_{12i+1}$, $W_{12i+3}$, .., $W_{12i+11}$ : i = 0,1,..);
appliquer un entrelacement convolutionnel aux mots pairs ($W_{12i}$, $W_{12i+2}$, .., $W_{12i+10}$ : i = 0,1,..) et le même entrelacement convolutionnel aux mots impairs ($W_{12i+1}$, $W_{12i+3}$, .., $W_{12i+11}$ : i = 0,1,..) dans lequel entrelacement convolutionnel, des retards d'entrelacement différents respectifs sont appliqués à des mots pairs respectifs ($W_{12i}$, $W_{12i+2}$, .., $W_{12i+10}$ : 1 =0,1,..) et à d'autres mots impairs retardés respectifs ($W_{12i+1}$, $W_{12i+3}$, .., $W_{12i+11}$ : i = 0,1,..), les retards d'entrelacement différents respectifs différant d'incréments multiples entiers d'un troisième retard de temps $d_3$ ;
appliquer des retards respectifs entre les codes de correction d'erreurs ($C_{4i}$ à $C_{4i+3}$ : i = 0,1,...) pour introduire un décalage de temps et effectuer l'entrelacement ;
partager chaque pluralité Tr de mots pairs entrelacés ($W_{12i}$, $W_{12i+2}$, .., $W_{12i+10}$ : i = 0; i = 1; ..) et chaque pluralité Tr de mots impairs décalés dans le temps et entrelacés ($W_{12i+1}$, $W_{12i+2}$, .., $W_{12i+10}$ : i = 0; i = 1; ..) parmi Tr canaux ;
partager chaque pluralité n de codes de correction d'erreur entrelacés parmi une pluralité d'autres canaux ;
moduler par impulsions codées et amplifier les

mots ($W_{12i}$; $W_{12i+1}$;.... $W_{12i+11}$ : i = 0, 1, ..) dans chacun des Tr canaux, et les codes ($C_{4i}$, $C_{4i+2}$; $C_{4i+1}$; $C_{4i+3}$ : i = 0, 1, ..) dans chaque autre canal ; et

enregistrer les mots modulés et amplifiés ($W_{12i}$; $W_{12i+1}$; ...;$W_{12i+11}$ : i = 0, 1,...) et des codes ($C_{4i}$; $C_{4i+2}$; $C_{4i+1}$, $C_{4i+3}$ : i =0,1,...) ensemble avec des signaux de synchronisation et de contrôle et des codes de détection d'erreur trame par trame, sur certaines respectives et correspondantes des Tr pistes de bande et des autres pistes de bande ;

lequel procédé est caractérisé en ce que :

l'entrelacement convolutionnel appliqué aux mots pairs ($W_{12i}$, $W_{12i+2}$, ..., $W_{12i+10}$ : i = 0; 1; ..) et autres mots impairs retardés ($W_{12i+1}$, $W_{12i+1}$, .., $W_{12i+11}$ : i = 0;1; ...) et les retards respectifs appliqués aux codes de correction d'erreur ($C_{4i}$ à $C_{4i+3}$ : i = 0;1; ...) sont tels que les mots de données PCM ($W_{12i}$ à $W_{12i+11}$ : i = 0; 1; ...) et les codes de correction d'erreur ($C_{4i}$ à $C_{4i+3}$ : i = 0;1;) sont agencés dans un ordre consécutif de Tr mots pairs respectifs ($W_{12i}$, $W_{12i+2}$, .. $W_{12i+10}$), un nombre entier $n_1$ : $0 \leq n_1$ < n de chaque pluralité respective n des codes de correction d'erreur ($C_{4i}$ à $C_{4i+3}$ : i = 0; i = 1; ..), Tr mots impairs antécédents ($W'_{12i+1}$, $W'_{12i+3}$, ..$W'_{12i+11}$) qui précèdent chacun respectif des Tr mots impairs respectifs ($W_{12i+1}$, $W_{12i+3}$, ..$W_{12i+11}$) du premier retard de temps $d_1$, et le nombre restant $n-n_1$, de chaque pluralité respective n desdits codes de correction d'erreur ($C_{4i}$ à $C_{4i+3}$ : i = 0; i = 1; ...) à des retards qui diffèrent un incrément d'unité dudit troisième retard de temps $d_3$ sous une contrainte qu'aucune augmentation en capacité de mémoire n'est exigée : $d_1 \gg (n- n_1) d_3$.

2. Procédé comme revendiqué en revendication 1 dans lequel :

les premier, second et troisième retards $d_1$, $d_2$ et $d_3$ sont respectivement en relation comme suit :

$$d_1 = (n-n_1) d_3;$$

$$d_2 \neq d_3.$$

3. Procédé comme revendiqué en revendication 2 dans lequel :

le nombre $n_1$ et le nombre restant $n-n_1$ de code de correction d'erreur ($C_{4i}$ à $C_{4i+3}$ : i=0; i=1; ...) sont égaux.

4. Procédé comme revendiqué en revendication 3 où n=4, $n_1 = n-n_1 = 2$ et $d_1 = 2d_3$.

5. Procédé comme revendiqué en revendication 4 dans lequel :

Tr=6; $d_1 = 40[T]$; $d_2 = 160[T]$; & $d_3 = 20 [T]$; où T est la période de l'entrelacement convolutionnel qui est accompli pour chaque succession 2Tr=12 de mots de données consécutifs ($W_{12i}$ à $W_{12i+11}$ : i=0; i=1;..).

6. Dispositif d'enregistrement pour enregistrer des signaux audio numériques sur une bande d'enregistrement et au moyen duquel des mots de données à modulation par impulsions codées (PCM) peuvent être enregistrés sur un nombre de pistes de bande et des codes de correction d'erreur à modulation par impulsions codées (PCM) peuvent être enregistrés sur un certain nombre d'autres pistes de bande, lequel dispositif comprend :

un premier moyen de retard de temps (65, 66) pour appliquer alternativement un premier retard de temps $d_1$, $d_1 \neq 0$, à une succession de mots de données numériques ($W_{12i}$ à $W_{12i+11}$ : i = 0,1,...) pour introduire un décalage de temps entre des mots pairs ($W_{12i}$, $W_{12i+2}$, .., $W_{12+10}$ : i = 0,1, ...) et des mots impairs ($W_{12i+1}$, $W_{12i+3}$, ..$W_{12i+11}$ : i = 0,1,...);

un moyen d'encodage (68), répondant audit premier moyen de retard de temps, pour encoder les mots pairs ($W_{12i}$, $W_{12i+2}$,..., $W_{12i+10}$ : i = 0,1, ...) et les mots impairs retardés ($W_{12i+1}$, $W_{12i+3}$, ..., $W_{12i+11}$ : i = 0,1,...) pour produire un certain nombre n de codes de correction d'erreur ($C_{4i}$ à $C_{4i+3}$ : i = 0; i=1; ...) pour chaque succession de 2 Tr mots de données numériques ($W_{12i}$ à $W_{12i+11}$ : i = 0; i = 1; ..);

un second moyen de retard de temps (65, 66) répondant audit premier moyen de retard de temps (65, 66) pour appliquer un second et autre retard de temps $d_2$ aux mots impairs retardés ($W_{12i+1}$, $W_{12i+3}$, ..., $W_{12i+11}$ : i = 0,1) pour introduire un autre décalage de temps entre les mots pairs ($W_{12i}$, $W_{12i+2}$, .., $W_{12i+10}$ : i = 0,1,..) et les mots impairs ($W_{12i+1}$, $W_{12i+3}$, .., $W_{12i+11}$ : i = 0,1,..);

un moyen d'entrelacement (65, 66), répondant audit second moyen de retard de temps, pour appliquer un entrelacement convolutionnel aux mots pairs ($W_{12i}$, $W_{12i+2}$, .., $W_{12i+10}$ : i = 0,1,..) et le même entrelacement convolutionnel aux mots impairs ($W_{12i+1}$, $W_{12i+3}$, .., $W_{12i+11}$ : i = 0,1,..) dans lequel entrelacement convolutionnel, des retards d'entrelacement différents respectifs sont appliqués à des mots pairs respectifs ($W_{12i}$, $W_{12i+2}$, .., $W_{12i+10}$ : i = 0,1,..) et à d'autres mots impairs retardés respectifs ($W_{12i+1}$, $W_{12i+3}$, .., $W_{12i+11}$ : i = 0,1,..), les retards d'entrelacement différents respectifs différant d'incréments de multiples entiers d'un troisième retard de temps $d_3$;

un moyen de retard de codes de correction d'erreur (65, 66) répondant au dit moyen d'encodage (68) pour appliquer des retards respectifs entre les codes de correction d'erreur ($C_{4i}$ à $C_{4i+3}$ : i = 0, 1,...) pour introduire un décalage de temps et pour effectuer un entrelacement;

des moyens de partage de pistes (12) relié audit moyen d'entrelacement et audit moyen de retard de code de correction d'erreurs (65, 66) pour partager chaque pluralité Tr de mots pairs entrelacés ($W_{12i}$, $W_{12i+2}$, .., $W_{12i+10}$ : i = 0; i = 1; ..) et chaque pluralité Tr de mots impairs décalés dans le temps et entrelacés ($W_{12i+1}$, $W_{12i+2}$, .., $W_{12i+2}$, .., $W_{12i+10}$ : i = 0; i = 1; ..) parmi Tr canaux et pour partager chaque pluralité n de codes de correction d'erreur entrelacés parmi un certain nombre d'autres canaux ; et

un certain nombre de Tr canaux et d'autres canaux, reliés auxdits moyens de partage de pistes (12) chacun comprenant un moyen de modulation PCM (13-15), un moyen d'amplification (16-18) et une tête d'enregistrement (19-21) ;

lequel dispositif est caractérisé en ce que :

ledit premier moyen de retard de temps (65, 66), ledit moyen d'entrelacement (65, 66) et ledit moyen de code de correction d'erreur (65, 66) sont adaptés de sorte que les mots de données PCM ($W_{12i}$ à $W_{12i+11}$ : i = 0; 1; ...) et les codes de correction d'erreur ($C_{4i}$ à $C_{4i+3}$ : i = 0;1;) sont agencés dans un ordre consécutif de Tr mots pairs respectifs ($W_{12i}$, $W_{12i+2}$, ..$W_{12i+10}$), un nombre entier $n_1$ : $0 \leq n_1 < n$ de chaque pluralité respective n des codes de correction d'erreur ($C_{4i}$ à $C_{4i+3}$ : i = 0; i = 1;..), Tr mots impairs antécédents ($W'_{12i+1}$, $W'_{12i+3}$, ..$W'_{12i+11}$) qui précèdent chacun respectif des Tr mots impairs respectifs ($W_{12i+1}$, $W_{12i+3}$, ..$W_{12i+11}$) dudit premier retard de temps $d_1$, et le nombre restant n-n, de chaque pluralité respective n desdits codes de correction d'erreur ($C_{4i}$ à $C_{4i+3}$ : i = 0; i = 1; ...) à des retards qui diffèrent d'un incrément d'unité dudit troisième retard de temps $d_3$ sous une contrainte qu'aucune augmentation en capacité de mémoire n'est exigée : $d_1 \gg (n - n_1) d_3$.

7. Dispositif d'enregistrement comme revendiqué en revendication 6 dans lequel :

les premier et second moyens de retard de temps (65, 66) peuvent être mis en service pour appliquer des retards $d_1$ & $d_2$ respectivement et le moyen d'entrelacement (65, 66) peut être mis en service pour appliquer des retards consécutifs différant d'un incrément d'unité du troisième retard $d_3$, lesquels retards $d_1$, $d_2$, $d_3$ sont en rapport comme suit :

$$d_1 = (n-n_1) d_3 ;$$

$$d_2 \neq d_3.$$

8. Dispositif d'enregistrement comme revendiqué en revendication 7 dans lequel le moyen de retard de code de correction d'erreur précité (65, 66) peut être mis en service pour appliquer des retards respectifs de sorte que le nombre $n_1$ et le nombre restant $n-n_1$ de chaque nombre n des codes de correction d'erreur ($C_{4i}$ à $C_{4i+3}$; i=0; i=1; ..) sont égaux.

9. Dispositif d'enregistrement comme revendiqué en revendication 8 dans lequel n=4, $n_1 = n-n_1 = 2$ et $d_1 = 2d_3$.

10. Dispositif d'enregistrement comme revendiqué en revendication 9 dans lequel Tr=6; $d_1 = 40[T]$; $d_2 = 160[T]$; & $d_3 = 20 [T]$;

où T est la période de l'entrelacement convolutionnel qui est accompli pour chaque succession 2Tr=12 de mots de données consécutifs ($W_{2i}$ à $W_{12i+11}$ : i=0; i=1;..).

11. Dispositif d'enregistrement comme revendiqué dans l'une quelconque des revendications précédentes 6 à 10 dans lequel :

les premier et second moyens de retard de temps précités, le moyen d'entrelacement et le moyen de retard de code de correction d'erreur précités consistent en une mémoire (65) et une commande de mémoire (66) agencée pour commander ladite mémoire (65).

12. Bande d'enregistrement ayant un certain nombre Tr de pistes sur lesquelles sont enregistrés des mots de données PCM ($W_{12i}$ à $W_{12i+11}$ : i = 0,1,..) représentant des signaux audio numériques et un certain nombre d'autres pistes sur lesquelles sont enregistrés des codes de correction d'erreur PCM, ($C_{4i}$ à $C_{4i+3}$ : i=0,1,..)

où sur chaque piste des pluralités respectives des mots de données PCM ($W_{12i}$ à $W_{12i+1}$ : i=0,1,..) et les codes de correction d'erreur PCM ($C_{4i}$ à $C_{4i+3}$ : i=0,1,..) sont précédés par des signaux de synchronisation et de contrôle respectifs et suivis par des codes de détection d'erreur respectifs et constituent des trames respectives, dans lesquelles trames des mots de données PCM ($W_{12i}$ à $W_{12i+1}$ : i=0,1,..) et des codes de correction PCM ($C_{4i}$ à $C_{4i+3}$ : i=0,1,..) sont dispersés selon un motif d'entrelacement,

caractérisé en ce que :

lesdits mots de données PCM ($W_{12i}$ à $W_{12i+11}$ : i=0; i=1;..) et les codes de correction PCM ($C_{4i}$

à $C_{4i+3}$ : i = 0; i=1;...) sont dispersés selon un motif d'entrelacement dans lequel ils sont agencés dans un ordre consécutif de Tr mots pairs respectifs ($W_{12i}$, $W_{12i+2}$, ..$W_{12i+10}$), un nombre entier $n_1$ : $0 \leq n_1 < n$ de chaque pluralité respective n des codes de correction d'erreur ($C_{4i}$ à $C_{4i+3}$ : i = 0; i=1;..), de Tr mots impairs antécédents ($W'_{12i+1}$, $W'_{12i+3}$, ..$W'_{12i+11}$) qui précèdent chacun respectif des Tr mots impairs respectifs ($W_{12i+1}$, $W_{12i+3}$, ..$W_{12i+11}$) dudit premier retard de temps $d_1$, et le nombre restant n-n, de chaque pluralité respective n desdits codes de correction d'erreur ($C_{4i}$ à $C_{4i+3}$ : i=0; i=1; ...) à des retards qui différent d'un incrément d'unité dudit troisième retard de temps $d_3$ sous une contrainte qu'aucune augmentation en capacité mémoire n'est exigée : $d_1 > (n-n_1) d_3$.

13. Bande d'enregistrement comme revendiqué en revendication 12 ayant 8 pistes (1-8), sur 6 (2-6) desquelles sont enregistrés les mots de données PCM ($W_{12i}$ à $W_{12i+1}$ : i=0,1,..) et sur 2 (1,8) desquelles sont enregistrés les codes de correction d'erreur PCM ($C_{4i}$ à $C_{4i+3}$ : i=0,1,..) où

chacun des 6 mots de données PCM pairs ($W_{12i}$, $W_{12i+2}$, .., $W_{12i+10}$ : i=0; i=1; ..) sont enregistrés sur des seconde à septième pistes (2-7) à des intervalles de 4 trames partant de chaque trame nulle ;
deux codes de correction d'erreur ($C_{4i+3}$, $C_{4i+1}$ : i=0; i=1;..) pour chacun des quatre codes de correction d'erreur ($C_{4i}$ à $C_{4i+3}$ : i=0,i=1;..) encodés pour 6 mots de données PCM pairs et 6 mots de données PCM impairs ($W_{12i}$ à $W_{12i+11}$ : i=0,i=1;..) sont enregistrés sur les première et huitième pistes (1,8) à des intervalles de quatre trames suivant chaque dernier mot pair ($W_{12i+10}$ : i=0;i=1;..);
chaque 6 mots de données PCM impairs ($W_{12i+1}$, $W_{12i+3}$, $W_{12i+11}$ : i=0; i=1;..) sont enregistrés sur les cinquième à septième pistes (5-7) et les seconde à quatrième pistes (2-4) à des intervalles de quatre trames partant de chaque quatrième piste; et
deux codes de correction d'erreur restants ($C_{4i+2}$, $C_{4i}$ : i=0;i=1;..) pour chacun des quatre codes ($C_{4i}$ à $C_{4i+3}$ : i=0; i=1;..) sont enregistrés sur les première et huitième pistes (1,8) à des intervalles de quatre trames se terminant à la sixième trame.

14. Dispositif de reproduction de données à modulation par impulsions codées pouvant convenir pour produire un signal analogique à partir de la bande d'enregistrement revendiquée en revendication 12 ou 13, ledit dispositif comprenant un décodeur (34) pouvant fonctionner pour accomplir une séquence d'opérations qui est l'inverse de la séquence d'opérations d'application de retard de temps, d'encodage et d'entrelacement spécifiée en revendication 1.

# F I G 1.

EP 0 395 125 B1

# F I G 2.

**(a) frame construction**

360

16 | 8 | 320 | 16

synchronous signal | PCM data or C2 inspection data | C1 inspection data

control signal

**(b) block construction**

8 track

synchronous signal

PCM data

C2 inspection data

C1 inspection data

control signal

# F I G .3. (PRIOR ART)

time

frame

| 0 | 5 | 10 | 15 | 20 | 25 | 30 | 35 | 40 | 45 | 50 | 55 | 60 |

8 track

EP 0 395 125 B1

# F I G 4. (PRIOR ART)

| PCM data after the A/D conversion | C2 encoding | data to the C1 encoding | track No. |
|---|---|---|---|
| $W_{12i}$ | | $W_{12i}$ | 2 |
| $W_{12i+1}$ — d1 | d2 | $W_{12i+1} - 12(d_1 + d_2)$ | 5 |
| $W_{12i+2}$ | 1d3 | $W_{12i+2} - 12d_3$ | 3 |
| $W_{12i+3}$ — d1 | d2 1d3 | $W_{12i+3} - 12(d_1 + d_2 + d_3)$ | 6 |
| $W_{12i+4}$ | 2d3 | $W_{12i+4} - 12(2d_3)$ | 4 |
| $W_{12i+5}$ — d1 | d2 2d3 | $W_{12i+5} - 12(d_1 + d_2 + 2d_3)$ | 7 |
| $W_{12i+6}$ | 4d3 | $W_{12i+6} - 12(4d_3)$ | 5 |
| $W_{12i+7}$ — d1 | d2 4d3 | $W_{12i+7} - 12(d_1 + d_2 + 4d_3)$ | 2 |
| $W_{12i+8}$ | 5d3 | $W_{12i+8} - 12(5d_3)$ | 6 |
| $W_{12i+9}$ — d1 | d2 5d3 | $W_{12i+9} - 12(d_1 + d_2 + 5d_3)$ | 3 |
| $W_{12i+10}$ | 6d3 | $W_{12i+10} - 12(6d_3)$ | 7 |
| $W_{12i+11}$ — d1 | d2 6d3 | $W_{12i+11} - 12(d_1 + d_2 + 6d_3)$ | 4 |
| $C_{4i+3}$ | d2 7d3 | $C_{4i+3} - 4(d_2 + 7d_3)$ | 1 |
| $C_{4i+2}$ | 7d3 | $C_{4i+2} - 4(7d_3)$ | 8 |
| $C_{4i+1}$ — d2 | 3d3 | $C_{4i+1} - 4(d_2 + 3d_3)$ | 8 |
| $C_{4i+0}$ | 3d3 | $C_{4i+0} - 4(3d_3)$ | 1 |

# F I G 5.

from the A/D
converter 2

memory

65

11

to the track
division circuit

66

memory
control

67

C1 encoder

68

C2 encoder

EP 0 395 125 B1

F I G 6. (PRIOR ART)

1st material          connection point

(A)          (B)   (C)

cross    fading

(C)    (B)    (A)

2nd material

F I G . 7.

# F I G .8.

| PCM data after the A/D conversion | C2 encoding | data to the C1 encoding | track No. |
|---|---|---|---|
| W12i | | W12i | 2 |
| W12i+1 | d1 / d2 | W12i+1−12(d1+d2) | 5 |
| W12i+2 | 1d3 | W12i+2−12d3 | 3 |
| W12i+3 | d1 / d2 / 1d3 | W12i+3−12(d1+d2+d3) | 6 |
| W12i+4 | 2d3 | W12+4−12(2d3) | 4 |
| W12i+5 | d1 / d2 / 2d3 | W12i+5−12(d1+d2+2d3) | 7 |
| W12i+6 | 3d3 | W12i+6−12(3d3) | 5 |
| W12i+7 | d1 / d2 / 3d3 | W12i+7−12(d1+d2+3d3) | 2 |
| W12i+8 | 4d3 | W12i+8−12(4d3) | 6 |
| W12i+9 | d1 / d2 / 4d3 | W12i+9−12(d1+d2+4d3) | 3 |
| W12i+10 | 5d3 | W12i+10−12(5d3) | 7 |
| W12i+11 | d1 / d2 / 5d3 | W12i+11−12(d1+d2+5d3) | 4 |
| C4i+3 | 6d3 | C4i+3−4(6d3) | 1 |
| C4i+2 | d2 / 6d3 | C4i+2−4(d2+6d3) | 1 |
| C4i+1 | 7d3 | C4i+1−4(7d3) | 8 |
| C4i+0 | d2 / 7d3 | C4i+0−4(d2+7d3) | 8 |

EP 0 395 125 B1